# EUROPEAN PATENT SPECIFICATION

(11) **EP 3 868 514 B1**
(45) Date of publication and mention of the grant of the patent: **26.06.2024**
(21) Application number: 21157087.4
(22) Date of filing: 15.02.2021
(51) Int. Cl.: B23Q 17/24

(54) **MACHINE TOOL FOR WORKING PIECES CONFIGURED TO CONTROL ONE OR MORE WORKING STEPS**
WERKZEUGMASCHINE ZUR BEARBEITUNG VON WERKSTÜCKEN, KONFIGURIERT ZUR STEUERUNG EINES ODER MEHRERER ARBEITSSCHRITTE
MACHINE-OUTIL POUR PIÈCES À USINER CONFIGURÉE POUR CONTRÔLER UNE OU PLUSIEURS ÉTAPES DE TRAVAIL

(30) Priority: 18.02.2020 IT 202000003230
(43) Date of publication of application: 25.08.2021
(73) Proprietor: SCM Group S.p.A., 47921 Rimini (RN) (IT)
(72) Inventor: MANDOLESI, Stefano, 47921 Rimini (IT); GALLO, Gianluca, 47921 Rimini (IT)
(74) Representative: Tiburzi, Andrea

(56) References cited:
- EP-A1- 1 932 618
- EP-A1- 3 348 350
- WO-A1-2019/008855
- CN-U- 207 629 741
- DE-U1-202014 102 322
- US-A1- 2006 177 119
- US-A1- 2018 099 369
- US-A1- 2019 258 863

## Description

The present invention relates to a machine tool for working pieces configured to control one or more working steps.

These pieces can be panels made of different materials, such as wood, ceramic, plastic, metal, glass, fiberglass.

More in detail, the present invention relates to a machine tool for working panels capable of controlling what happens during the entire manufacturing process of said panels or some specific phases of said manufacturing process.

In general, a machine tool comprises several stations, such as for example at least one loading station equipped with a plane on which the panels to be machined are arranged, at least one unloading station, having a plane from which the machined panels are picked up by an operator or by a mechanical arm, at least one working station for working said panels (for example said working station may comprise a cutting device for cutting said panels) and the machine tool, object of the present invention, which is designed and built to control one or several phases associated with the respective stations.

In the following the description will be addressed to a cutting machine and more particularly to a sawing machine for sawing panels.

However, the same advantages can be obtained with any machine tool for working pieces, without departing from the scope of the invention.

### Prior art

Currently, a machine tool for working pieces, such as wooden panels, is equipped with alarm systems to send an alarm signal in case of failures or malfunctions, for example when a component of the machine tool itself ceases to function or it does not work properly.

However, it is not possible for an operator to know the site where the failure or malfunction occurred or the cause of such failure or malfunction.

When an alarm system is triggered, the operator is only aware that a fault or malfunction has occurred.

When considering a sawing machine for sawing panels including a plurality of working stations arranged in series with each other, it is apparent that in the event of a fault or malfunction, the operator is forced to waste time to figure out where this fault or malfunction occurs and the type of failure or malfunction, despite the activation of the alarm system.

Consequently, a disadvantage is due to the fact that known machine tools do not allow an operator to know the site where the failure or malfunction occurred and the type of failure or malfunction.

In other words, when the alarm system is activated due to a fault or a malfunction, the only information known to the operator is that a problem has occurred.

Relevant prior art documents comprises also an international patent WO 2019/008855 A1, which is considered to disclose the preamble of claim 1, an European patent application EP 3348350 A1, a Chinese patent for utility model CN 207629741 U, a German patent for utility model DE 202014102322 U1, and an European patent application EP 1932618 A1.

### Aim of the invention

The aim of the present invention is to overcome said disadvantage by providing a machine tool for working pieces designed to control the working process or one or more steps thereof, in such a way as to facilitate the task of an operator in identifying the site where a failure or malfunction has occurred and the type of failure or malfunction.

A further aim of the present invention is to reduce the intervention time by an operator.

### Object of the invention

It is therefore object of the present invention a machine tool for working one or more pieces, said machine tool comprising:
- one or more video cameras, each of which is arranged in a respective predetermined position with respect to said machine tool and configured to record a video during the working of said pieces by said machine tool,
- storage means for storing the videos of each video camera,
- displaying means for displaying the videos of each video camera, stored in said storage means.

Said machine tool also comprises a logic control unit, connected to said storage means and configured to:
- acquire one or more videos from said storage means,
- detect the operating state of said machine tool, in particular one or more data concerning said operating state of said machine tool, when said machine tool is in use.

Said logic control unit is configured to acquire said one or more videos from said storage means on the basis of said operating state of said machine tool, in particular on the basis of said one or more data concerning said operating state of said machine tool.

Said logic control unit is configured to activate/deactivate one or more video cameras in a predetermined time window.

With reference to the structure of said machine tool, said machine tool may comprise at least one working station and at least one video camera, the latter arranged in correspondence or in proximity of said at least one working station so as to record a video concerning an area of said working station, and/or at least one loading station and at least one video camera, the latter arranged in correspondence or in the proximity of said at least one loading station so as to record a video concerning an area of said loading station, and/or at least one unloading station and at least one video camera, the latter arranged in correspondence or proximity of said unloading station so as to record a video concerning an area of said unloading station.

Furthermore, said machine tool may comprise a respective blower for each video camera, so as to remove the dust from each video camera.

With reference to said display means, said display means may comprise a display included in a mobile electronic device and/or in a multimedia totem connected to said machine tool.

In particular, the logic control unit may be configured to send at least a portion of said one or more videos to said mobile electronic device and/or to said multimedia totem.

More particularly, the logic control unit may be configured to send said operating state of said machine tool to said mobile electronic device and/or to said multimedia totem, in particular, said one or more data concerning said operating state of said machine tool.

Advantageously, the control logic unit may be configured to send at least a portion of said one or more videos to a cloud server, and said cloud server may be configured to send said at least a portion of said one or more videos to said mobile electronic device and/or said multimedia totem.

Said logic control unit may be configured to send said operating state of said machine tool to said cloud server, in particular said one or more data concerning said operating state of said machine tool.

With reference to said display means, in a first alternative, said storage means may comprise a respective memory element, arranged inside each video camera.

In a second alternative, said storage means may comprise a memory element for said one or more video cameras, arranged outside each video camera, in particular in a cloud server.

With reference to said one or more cameras may be infrared cameras.

Finally, regardless of the presence of infrared cameras, said machine tool may be equipped with lighting means for illuminating one or more shaded areas that fall within a visual field of one or more video cameras, wherein said lighting means preferably comprising one or more LEDs.

### List of attached Figures

The present invention will be now described, for illustrative but not limitative purposes, according to its preferred embodiments, with particular reference to the figures of the enclosed drawings, wherein:
Figure 1 is a schematic top view of a sawing machine for sawing for sawing wooden panels, provided with a plurality of video cameras arranged at or near a respective working station of said sawing machine;
Figure 2 is a side view of one of the two working stations of the sawing machine of Figure 1;
Figure 3 is a schematic perspective view of one of the two working stations of the sawing machine of Figure 1;
Figure 4 is a schematic view of a video camera to show that said video camera comprises inside a memory element.

### Detailed description of the invention

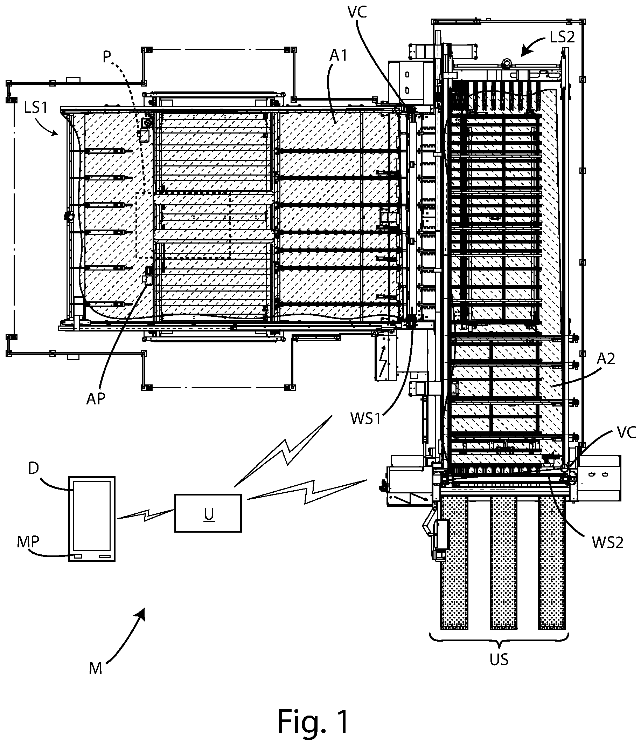

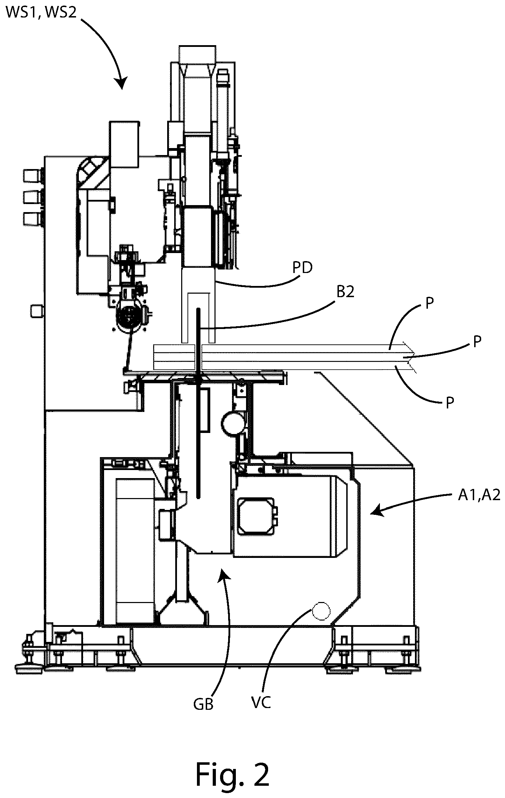

With reference to Figures 1 to 4, a machine tool M is described for working pieces P, such as for example panels made of wood, ceramic, plastic, metal, glass, fiberglass.

In the example described, said machine tool M is a sawing machine, and said pieces P are wooden panels.

Said sawing machine M comprises:
- one or more video cameras VC, each of which is arranged in a respective predetermined position with respect to said sawing machine M and configured to record a video during the working of said pieces by said sawing machine M,
- storage means S for storing the videos of each video camera VC,
- display means D for displaying the videos from each video camera VC and stored in said storage means S.

As shown in the embodiment that is described, said sawing machine M comprises a logic control unit U, connected to said storage means S and configured to:
- acquire one or more videos from said storage means S,
- detect the operating state of said sawing machine M, in particular one or more data concerning said operating state of said sawing machine M, when said sawing machine is in use.

Advantageously, in case of a breakdown or malfunction of the sawing machine M, an operator has double information: a first information deriving from the video of one or more video cameras VC, and a second information concerning the operating status of the sawing machine itself.

From the combination of this information, an operator can understand in detail where the failure or malfunction occurred and the type of failure or malfunction.

In other words, the information not deducible from the video(s) can be obtained by viewing the data concerning the operating status of the sawing machine M, before the breakdown or malfunction.

For example, the data associated with the operating status of the sawing machine M can be the following: a data associated with the moving saw carriage/stationary saw carriage, a data associated with the rotating blade/stationary blade, a data associated with the fact that the blade and scoring device are not aligned, a data associated with the presence/absence of the blade, a data associated with the raised pressing device/lowered pressing device, a data associated with the presence of a piece under of the pressing device, a data associated with the presence of a piece on one or more planes of at least one loading station and/or at least one unloading station, a data associated with the presence of a piece on a loading plane, a data associated with the end of the pieces in storage unit, a data associated with the end of the working process on one or more pieces according to a predetermined cutting pattern, a data associated with one or more moving pushers, a data associated with one or more grippers gripping a piece, a data connected to the on/off suction, a data associated with an alarm state of the machine, a data associated with a pause state, a data associated with an operational stop state, a data associated with the machine on/machine off, a data associated with the machine in emergency, a data associated with the position of one or more floors of at least one loading station and/or at least one unloading station, a data associated with the presence of an operator, a data associated with the violation of a security perimeter by an operator.

In other words, the operating status of the machine can be identified by one or more data indicated above.

However, it is not necessary to acquire or record data relating to the operating status of the sawing machine M.

For example, in a not shown variant, it is possible to detect the operating status of this sawing machine from one or more videos by means of a known algorithm, such as a motion detection algorithm, which can be performed by the control logic unit, or from at least one video camera configured to implement this algorithm.

Said logic control unit U is configured to acquire said one or more videos from said storage means S as a function of the operating state of the sawing machine M, in particular as a function of said one or more data concerning said operating state.

In general, as already mentioned, a machine tool M can comprise a plurality of stations connected in series with each other: at least one loading station, at least one unloading station, and at least one working station to perform respective machining on one or more pieces P.

The panels P to be worked are arranged on a support plane of said at least one loading station, and advance on said support plane along an advancement longitudinal direction (with respect to the support plane) until they reach the working station, by means of a thrust exerted by a plurality of pushers, each of which can comprise a respective gripper for gripping the workpiece.

The panels worked by the working station of the machine tool M reach a support surface of an unloading station, and are picked up by an operator or by a mechanical arm.

In the embodiment described, said sawing machine M comprises a loading station LS1 and a working station WS1, arranged at one end of said loading station LS1, as well as a further loading station LS2, connected to said working station WS1, a further working station WS2, arranged at one end of said further loading station LS2 and an unloading station US (in the example described, said unloading station comprises three floors, in particular three air-veiled tops, each one of which is movable in a direction transverse with respect to the advance direction).

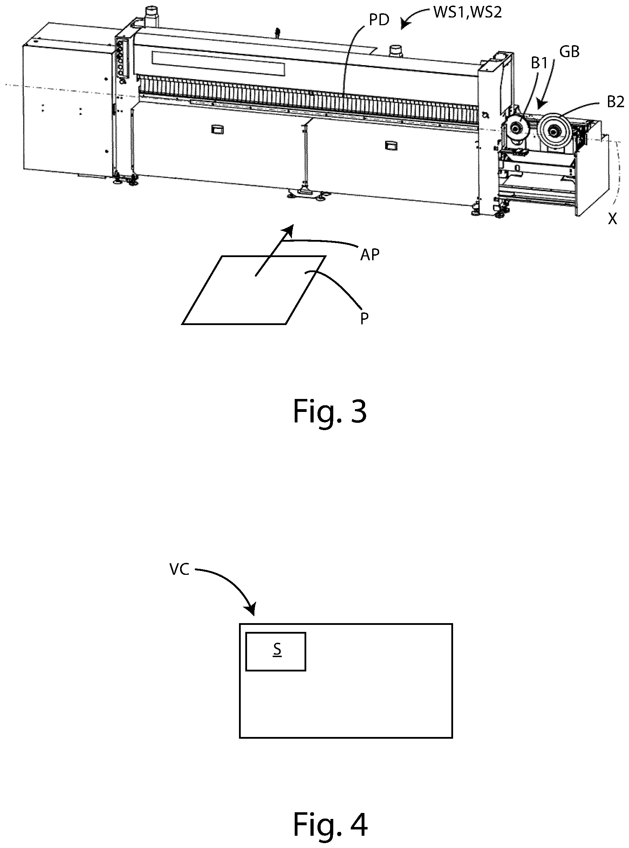

As shown in Figure 3, each working station WS1, WS2 is a cutting station that comprises:
- a respective pressing device PD, coupled to the base of said machine tool, movable between a first position or lower position, in which the panel is clamped on the support surface of the respective loading station LS1, LS2 at the respective cutting station, and a second or upper position, in which the panel is released by said pressure device PD,
- a respective cutting device GB comprising a first blade B1 for engraving the panel, and a second blade B2 for cutting said panel (as it is known).

Each pressing device PD can move in a first direction or in a second direction (opposite to said first direction) along an axis vertical with respect to the advancement direction of the panel(s) P on the support plane of the loading station LS1.

The advancement direction of the panel(s) is indicated by the arrow AP.

The cutting device GB can move in a first direction or in a second direction (opposite to said first direction) along an axis X, which is transversal to the feed direction AP of the panel(s).

In the embodiment that is described, said sawing machine M comprises two video cameras VC: a video camera VC arranged at or near said working station WS1, in such a way as to film an area A1, so as to record a video concerning said area A1, and a further video camera VC, arranged at or near said further working station WS2, in such a way as to film a further area A2, so as to record a video concerning said further area A2.

Each area A1, A2 is indicated in Figure 1 with a respective plurality of dashed lines.

Although not shown in the Figures, the sawing machine M can comprise further video cameras, without departing from the scope of the invention.

For example, at least one video camera can be arranged at, or near the loading station LS1, in such a way as to record an area of said loading station LS1 (so as to record a video concerning said area), and/or at least one video camera can be arranged at or near the unloading station LS1, in such a way as to film an area of said unloading station LS1 (so as to record a video concerning said area).

The logic control unit U is configured to activate/deactivate one or more video cameras VC in a predetermined time window.

Said predetermined time window is chosen on the basis of the operating state of the sawing machine M, in particular on the basis of the data relating to said operating state of said sawing machine.

Although not shown in the Figures, the sawing machine M can comprise a protection element for each video camera VC.

Furthermore, although not shown in the Figures, it is preferable that said sawing machine M comprises a respective blower for each video camera VC, so as to remove the dust from each video camera VC.

With reference to said display means D, said display means D can comprise a display included in a mobile electronic device MP (as in the case of the embodiment that is described) and/or in a multimedia totem connected to said sawing machine M.

A mobile electronic device means any electronic device, such as a smartphone, tablet, laptop, or similar.

With reference to said logic control unit U, it can be configured to send at least a portion of said one or more videos to said mobile electronic device MP and/or to said multimedia totem.

It is preferable that said logic control unit U is configured to send the operating status of said sawing machine M (in particular said one or more data concerning the operating status of the sawing machine M) to said mobile electronic device MP and/or said multimedia totem.

Although not shown in the Figures, said logic control unit U can be configured to send at least a portion of said one or more videos to a cloud server, and the latter can be configured to send said at least one portion of said one or more videos to said mobile electronic device MP and/or to said multimedia totem.

Furthermore, said logic control unit U can be configured to send the operating status of said sawing machine M to said cloud server, in particular, said one or more data concerning the operating status of said sawing machine, regardless of the sending of said portion of video to said mobile electronic device MP and/or to said multimedia totem.

With reference to said storage means S, in the embodiment that is described, as shown in Figure 4, said storage means S comprises a respective memory element, arranged inside each video camera VC.

However, although not shown in the Figures, said storage means S can comprise a single memory element for said one or more video cameras VC, arranged outside each video camera VC, for example in a cloud server.

Said one or more video cameras can be infrared cameras.

Alternatively, or in combination with infrared cameras, said sawing machine M can be provided with lighting means, for illuminating one or more shaded areas that fall within a field of view of the one or more video cameras VC.

It is preferable that said lighting means comprise one or more LEDs.

Advantageously, through said infrared cameras and/or said illumination means, it is possible to obtain the recording of one or more videos in different lighting conditions, up to complete darkness.

### Advantages

Advantageously, by means of the machine tool object of the present invention, it is possible to facilitate the task of an operator who wishes to identify where a fault or malfunction has occurred and to understand the type of fault or malfunction.

In this way, it is possible to reduce the intervention time by the operator himself.

A further advantage is given by the operator's ability to watch the content of the video captured through one or more video cameras, and read the data regarding the operating status of the machine tool up to the moment of failure or malfunction.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine tool (M) for working one or more pieces (P), said machine tool (M) comprising:
- one or more video cameras (VC), each of which is arranged in a respective predetermined position with respect to said machine tool (M) and configured to record a video during the working of said pieces (P) by said machine tool (M),
- storage means (S) for storing the videos of each video camera (VC),
- displaying means (D) for displaying the videos of each video camera (VC), stored in said storage means (S),
said machine tool (M) comprises a logic control unit (U), connected to said storage means (S) and configured to:
- acquire one or more videos from said storage means (S),
- detect the operating state of said machine tool (M), in particular one or more data concerning said operating state of said machine tool (M), when said machine tool (M) is in use,
said logic control unit (U) is configured to acquire said one or more videos from said storage means (S) on the basis of said operating state of said machine tool (M), in particular on the basis of said one or more data concerning said operating state of said machine tool (M),
**characterised in that**
said logic control unit (U) is configured to activate/deactivate one or more video cameras (VC) in a predetermined time window, wherein said predetermined time window is chosen on the basis of the operating state of the machine tool (M), in particular on the basis of said one or more data concerning said operating state of said machine tool.

2. Machine tool (M) according to the previous claim,
**characterized**
**in that**
said machine tool (M) comprises at least one working station (WS1,WS2) and at least one video camera (VC), the latter arranged in correspondence or in proximity of said at least one working station (WS1,WS2) so as to record a video concerning an area (A1,A2) of said working station (WS1,WS2),
and/or
**in that**
said machine tool (M) comprises at least one loading station (LS1,LS2) and at least one video camera (VC), the latter arranged in correspondence or in proximity of said at least one loading station (LS1 ,LS2) so as to record a video concerning an area of said loading station (LS1, LS2),
and/or
**in that**
said machine tool (M) comprises at least one unloading station (US) and at least one video camera (VC), the latter arranged in correspondence or proximity of said unloading station (US) so as to record a video concerning an area of said unloading station (US).

3. Machine tool (M) according to any one of the previous claims, **characterized in that** said machine tool (M) comprises a respective blower for each video camera (VC), so as to remove the dust from each video camera (VC).

4. Machine tool (M) according to any one of the previous claims, **characterized in that** said display means (D) comprise a display included in a mobile electronic device (MP) and/or in a multimedia totem connected to said machine tool (M).

5. Machine tool (M) according to the previous claim, **characterized in that** said logic control unit (U) is configured to send at least a portion of said one or more videos to said mobile electronic device (MP) and/or to said multimedia totem.

6. Machine tool (M) according to the previous claim, **characterized in that** said logic control unit (U) is configured to send said operating state of said machine tool (M) to said mobile electronic device (MP) and/or to said multimedia totem, in particular said one or more data concerning said operating state of said machine tool (M).

7. Machine tool (M) according to any one of the previous claims, **characterized in that**
said logic control unit (U) is configured to send at least a portion of said one or more videos to a cloud server,
**in that**
said cloud server is configured to send said at least a portion of said one or more videos to said mobile electronic device (MP) and/or said multimedia totem.

8. Machine tool (M) according to the previous claim, **characterized in that** said logic control unit (U) is configured to send said operating state of said machine tool (M) to said cloud server, in particular said one or more data concerning said operating state of said machine tool (M).

9. Machine tool (M) according to any one of claims 1-8, **characterized in that** said storage means (S) comprise a respective memory element, arranged inside each video camera (VC).

10. Machine tool (M) according to any one of claims 1-8, **characterized in that** said storage means (S) comprise a memory element for said one or more video cameras (VC), arranged outside each camera (VC), in particular in a cloud server.

11. Machine tool (M) according to any one of claims 1-10, **characterized in that** said one or more video cameras is/are infrared camera/s.

12. Machine tool (M) according to any one of the previous claims, **characterized in that** said machine tool (M) is provided with lighting means for illuminating one or more shaded areas that fall within a visual field of one or more video cameras (VC); said lighting means preferably comprising one or more LEDs.

## Patentansprüche

1. Werkzeugmaschine (M) zur Bearbeitung eines oder mehrerer Werkstücke (P), wobei die Werkzeugmaschine (M) umfasst:
- eine oder mehrere Videokameras (VC), von denen jede in einer jeweiligen vorbestimmten Position in Bezug auf die Werkzeugmaschine (M) angeordnet und konfiguriert ist, um ein Video während der Bearbeitung der Teile (P) durch die Werkzeugmaschine (M) aufzuzeichnen
- Speichermittel (S) zum Speichern der Videos jeder Videokamera (VC),
- Anzeigemittel (D) zum Anzeigen der Videos jeder Videokamera (VC), die in den Speichermitteln (S) gespeichert sind,
die Werkzeugmaschine (M) eine logische Steuereinheit (U) umfasst, die mit dem Speichermittel (S) verbunden und konfiguriert ist, um:
- ein oder mehrere Videos von dem Speichermittel (S) zu erfassen,
- den Betriebszustand der Werkzeugmaschine (M) zu erfassen, insbesondere eine oder mehrere Daten, die den Betriebszustand der Werkzeugmaschine (M) betreffen, wenn die Werkzeugmaschine (M) in Gebrauch ist,
die logische Steuereinheit (U) so konfiguriert ist, dass sie das eine oder die mehreren Videos von den Speichermitteln (S) auf der Grundlage des Betriebszustands der Werkzeugmaschine (M), insbesondere auf der Grundlage des einen oder die mehreren Daten bezüglich des Betriebszustands der Werkzeugmaschine (M), erfasst,
**dadurch gekennzeichnet, dass**
die logische Steuereinheit (U) so konfiguriert ist, dass sie eine oder mehrere Videokameras (VC) in einem vorbestimmten Zeitfenster aktiviert/deaktiviert, wobei das vorbestimmte Zeitfenster auf der Grundlage des Betriebszustands der Werkzeugmaschine (M) gewählt wird,
insbesondere auf der Grundlage der einen oder mehreren Daten, die den Betriebszustand der Werkzeugmaschine betreffen.

2. Werkzeugmaschine (M) nach dem vorhergehenden Anspruch,
**dadurch gekennzeichnet, dass**
die Werkzeugmaschine (M) mindestens eine Arbeitsstation (WS1,WS2) und mindestens eine Videokamera (VC) umfasst, wobei letztere in Übereinstimmung mit oder in der Nähe der mindestens einen Arbeitsstation (WS1,WS2) angeordnet ist, um ein Video betreffend einen Bereich (A1,A2) der Arbeitsstation (WS1,WS2) aufzuzeichnen,
und/oder
dadurch,
dass die Werkzeugmaschine (M) mindestens eine Ladestation (LS1,LS2) und mindestens eine Videokamera (VC) umfasst, wobei letztere in Übereinstimmung mit oder in der Nähe der mindestens einen Ladestation (LS1,LS2) angeordnet ist, um ein Video bezüglich eines Bereichs der Ladestation (LS1,LS2) aufzuzeichnen, und/oder
dass die Werkzeugmaschine (M) mindestens eine Entladestation (US) und mindestens eine Videokamera (VC) umfasst, wobei letztere in Übereinstimmung oder in der Nähe der Entladestation (US) angeordnet ist, um ein Video aufzuzeichnen, das einen Bereich der Entladestation (US) betrifft.

3. Werkzeugmaschine (M) nach einem der vorhergehenden Ansprüche, **dadurch gekennzeichnet, dass** die Werkzeugmaschine (M) ein entsprechendes Gebläse für jede Videokamera (VC) umfasst, um den Staub von jeder Videokamera (VC) zu entfernen.

4. Werkzeugmaschine (M) nach einem der vorhergehenden Ansprüche, **dadurch gekennzeichnet, dass** die Anzeigemittel (D) eine Anzeige umfassen, die in einem mobilen elektronischen Gerät (MP) und/oder in einem mit der Werkzeugmaschine (M) verbundenen Multimedia-Totem enthalten ist.

5. Werkzeugmaschine (M) nach dem vorhergehenden Anspruch, **dadurch gekennzeichnet, dass** die logische Steuereinheit (U) so konfiguriert ist, dass sie zumindest einen Teil des einen oder der mehreren Videos an das mobile elektronische Gerät (MP) und/oder an das Multimedia-Totem sendet.

6. Werkzeugmaschine (M) nach dem vorhergehenden Anspruch, **dadurch gekennzeichnet, dass** die logische Steuereinheit (U) so konfiguriert ist, dass sie den Betriebszustand der Werkzeugmaschine (M) an das mobile elektronische Gerät (MP) und/oder an das Multimedia-Totem sendet, insbesondere die einen oder mehreren Daten bezüglich des Betriebszustands der Werkzeugmaschine (M).

7. Werkzeugmaschine (M) nach einem der vorhergehenden Ansprüche,
**dadurch gekennzeichnet,**
**dass** die logische Steuereinheit (U) so konfiguriert ist, dass sie zumindest einen Teil des einen oder der mehreren Videos an einen Cloud-Server sendet,
**dass** der Cloud-Server so konfiguriert ist, dass er den zumindest einen Teil des einen oder der mehreren Videos an das mobile elektronische Gerät (MP) und/oder das Multimedia-Totem sendet.

8. Werkzeugmaschine (M) nach dem vorhergehenden Anspruch, **dadurch gekennzeichnet, dass** die logische Steuereinheit (U) so konfiguriert ist, dass sie den Betriebszustand der Werkzeugmaschine (M) an den Cloud-Server sendet, insbesondere die einen oder mehreren Daten betreffend den Betriebszustand der Werkzeugmaschine (M).

9. Werkzeugmaschine (M) nach einem der Ansprüche 1-8, **dadurch gekennzeichnet, dass** die Speichermittel (S) ein jeweiliges Speicherelement umfassen, dass in jeder Videokamera (VC) angeordnet ist.

10. Werkzeugmaschine (M) nach einem der Ansprüche 1-8, **dadurch gekennzeichnet, dass** die Speichermittel (S) ein Speicherelement für die eine oder mehrere Videokameras (VC) umfassen, das außerhalb jeder Kamera (VC), insbesondere in einem Cloud-Server, angeordnet ist.

11. Werkzeugmaschine (M) nach einem der Ansprüche 1-10, **dadurch gekennzeichnet, dass** die eine oder die mehreren Videokameras Infrarotkamera/n ist/sind.

12. Werkzeugmaschine (M) nach einem der vorhergehenden Ansprüche, **dadurch gekennzeichnet, dass** die Werkzeugmaschine (M) mit Beleuchtungsmitteln zum Beleuchten eines oder mehrerer schattierter Bereiche versehen ist, die in ein Sichtfeld einer oder mehrerer Videokameras (VC) fallen; wobei die Beleuchtungsmittel vorzugsweise eine oder mehrere LEDs umfassen.

## Revendications

1. Machine-outil (M) pour le travail d'une ou plusieurs pièces (P), ladite machine-outil (M) comprenant:
- une ou plusieurs caméras vidéo (VC) disposées chacune dans une position respective prédéterminée par rapport à ladite machine-outil (M) et configurées pour enregistrer une vidéo pendant le travail desdites pièces (P) par ladite machine-outil (M),
- des moyens de stockage (S) pour stocker les vidéos de chaque caméra vidéo (VC),
- des moyens d'affichage (D) pour afficher les vidéos de chaque caméra vidéo (VC), stockées dans lesdits moyens de stockage (S),
ladite machine-outil (M) comprend une unité de commande logique (U), connectée auxdits moyens de stockage (S) et configurée pour:
- acquérir une ou plusieurs vidéos à partir dudit moyen de stockage (S),
- détecter l'état de fonctionnement de ladite machine-outil (M), en particulier une ou plusieurs données concernant ledit état de fonctionnement de ladite machine-outil (M), lorsque ladite machine-outil (M) est en cours d'utilisation,
ladite unité de commande logique (U) est configurée pour acquérir ladite ou plusieurs vidéos à partir desdits moyens de stockage (S) sur la base dudit état de fonctionnement de ladite machine-outil (M),
en particulier sur la base de ladite ou plusieurs données concernant ledit état de fonctionnement de ladite machine-outil (M), **caractérisée en ce que**
ladite unité de commande logique (U) est configurée pour activer/désactiver une ou plusieurs caméras vidéo (VC) dans une fenêtre temporelle prédéterminée, ladite fenêtre temporelle prédéterminée étant choisie en fonction de l'état de fonctionnement de la machine-outil (M),
en particulier sur la base d'une ou plusieurs données relatives à l'état de fonctionnement de la machine-outil.

2. Machine-outil (M) selon la revendication précédente,
**caractérisée en ce que**
ladite machine-outil (M) comprend au moins un poste de travail (WS1,WS2) et au moins une caméra vidéo (VC), cette dernière étant disposée en correspondance ou à proximité dudit au moins un poste de travail (WS1,WS2) de manière à enregistrer une vidéo concernant une zone (A1,A2) dudit poste de travail (WS1,WS2),
et/ou
**en ce que** ladite machine-outil (M) comprend au moins un poste de chargement (LS1,LS2) et au moins une caméra vidéo (VC), cette dernière étant disposée en correspondance ou à proximité dudit au moins un poste de chargement (LS1,LS2) afin d'enregistrer une vidéo concernant une zone dudit poste de chargement (LS1, LS2),
et/ou
**en ce que** ladite machine-outil (M) comprend au moins un poste de déchargement (US) et au moins une caméra vidéo (VC), cette dernière étant disposée en correspondance ou à proximité dudit poste de déchargement (US) de manière à enregistrer une vidéo concernant une zone dudit poste de déchargement (US).

3. Machine-outil (M) selon l'une quelconque des revendications précédentes, **caractérisée en ce que** ladite machine-outil (M) comprend une soufflerie respective pour chaque caméra vidéo (VC), de manière à dépoussiérer chaque caméra vidéo (VC).

4. Machine-outil (M) selon l'une quelconque des revendications précédentes, **caractérisée en ce que** lesdits moyens d'affichage (D) comprennent un écran inclus dans un dispositif électronique mobile (MP) et/ou dans un totem multimédia connecté à ladite machine-outil (M).

5. Machine-outil (M) selon la revendication précédente, **caractérisée en ce que** ladite unité de commande logique (U) est configurée pour envoyer au moins une partie de ladite ou desdites vidéos audit dispositif électronique mobile (MP) et/ou audit totem multimédia.

6. Machine-outil (M) selon la revendication précédente, **caractérisée en ce que** ladite unité de commande logique (U) est configurée pour envoyer ledit état de fonctionnement de ladite machine-outil (M) audit dispositif électronique mobile (MP) et/ou audit totem multimédia, en particulier ladite ou lesdites données concernant ledit état de fonctionnement de ladite machine-outil (M).

7. Machine-outil (M) selon l'une quelconque des revendications précédentes,
**caractérisée en ce que**
ladite unité logique de commande (U) est configurée pour envoyer au moins une partie de ladite ou desdites vidéos à un serveur cloud,
**en ce que**
ledit serveur cloud est configuré pour envoyer ladite au moins une partie de ladite une ou plusieurs vidéos audit dispositif électronique mobile (MP) et/ou audit totem multimédia.

8. Machine-outil (M) selon la revendication précédente, **caractérisée en ce que** ladite unité de commande logique (U) est configurée pour envoyer ledit état de fonctionnement de ladite machine-outil (M) audit serveur cloud, en particulier ladite ou lesdites données concernant ledit état de fonctionnement de ladite machine-outil (M).

9. Machine-outil (M) selon l'une quelconque des revendications 1-8, **caractérisée en ce que** lesdits moyens de stockage (S) comprennent un élément de mémoire respectif, disposé à l'intérieur de chaque caméra vidéo (VC).

10. Machine-outil (M) selon l'une quelconque des revendications 1-8, **caractérisée en ce que** lesdits moyens de stockage (S) comprennent un élément de mémoire pour lesdites une ou plusieurs caméras vidéo (VC), disposé à l'extérieur de chaque caméra (VC), en particulier dans un serveur cloud.

11. Machine-outil (M) selon l'une quelconque des revendications 1-10, **caractérisée en ce que** ladite ou lesdites caméras vidéo sont des caméras infrarouges.

12. Machine-outil (M) selon l'une quelconque des revendications précédentes, **caractérisée en ce que** ladite machine-outil (M) est pourvue de moyens d'éclairage pour éclairer une ou plusieurs zones ombragées qui se trouvent dans un champ visuel d'une ou plusieurs caméras vidéo (VC); lesdits moyens d'éclairage comprenant de préférence une ou plusieurs LED.
